# EUROPEAN PATENT SPECIFICATION

(11) **EP 3 785 219 B1**
(45) Date of publication and mention of the grant of the patent: **27.07.2022**
(21) Application number: 19726754.5
(22) Date of filing: 23.04.2019
(51) Int. Cl.: G06T 3/00

(54) **METHOD OF STITCHING A PLURALITY OF IRIDOCORNEAL ANGLE IMAGES**
STITCHING-VERFAHREN FÜR EINE VIELZAHL VON BILDERN DES IRIDOKORNEALEN WINKELS
PROCÉDÉ D'ASSEMBLAGE D'UNE PLURALITÉ D'IMAGES D'ANGLE IRIDOCORNÉEN

(30) Priority: 27.04.2018 IT 201800004930
(43) Date of publication of application: 03.03.2021
(73) Proprietor: NIDEK CO. LTD., Gamagori, Aichi 443-0038 (JP)
(72) Inventor: DE GIUSTI, Andrea, 35128 Padova (IT); MINOZZI, Mattia, 35020 Legnaro (PD) (IT); PASCOLINI, Michele, 35128 Padova (IT); ROSSI, Silvia, 33074 Fontanafredda (PN) (IT); GIARETTA, Andrea, 36100 Vicenza (IT)
(74) Representative: De Ros, Alberto
(86) International application number: PCT/IB2019/053343
(87) International publication number: WO 2019/207480

(56) References cited:
- WO-A1-2015/180923
- RICHARD SZELISKI: "Image Alignment and Stitching: A Tutorial", FOUNDATIONS AND TRENDS IN COMPUTER GRAPHICS AND VISION, vol. 2, no. 1, 1 January 2006 (2006-01-01) , pages 1-104, XP055400792, US
- GHOSH DEBABRATA ET AL: "A survey on image mosaicing techniques", JOURNAL OF VISUAL COMMUNICATION AND IMAGE REPRESENTATION, vol. 34, 2016, pages 1-11, XP029359757,
- PARUL M. JAIN ET AL: "A Review Paper on Various Approaches for Image Mosaicing", INTERNATIONAL JOURNAL OF COMPUTATIONAL ENGINEERING RESEARCH, vol. 03, no. 4, 1 April 2013 (2013-04-01), pages 106-109, XP055511534, England

## Description

### FIELD of the INVENTION

The present invention relates to a method of stitching a plurality of iridocorneal angle images as well as to a corresponding computer program product and medical apparatus.

### BACKGROUND ART

Nowadays there are medical apparatuses that are able to output iridocorneal angle images of an eye as examination result thereof. One of these apparatuses is disclosed in patent document WO 2015/180923 A1 of the present Applicant. This patent document already explains that it would be desirable to provide the doctor that uses the apparatus with a panoramic annular picture of the iridocorneal angle of the whole eye (see Fig. 8 WO 2015/180923 A1) or a panoramic linear picture of the iridocorneal angle of the whole eye (see Fig. 9 WO 2015/180923 A1).

In principle, this result may be achieved by placing the images side by side as shown in this patent document (see Fig. 8 and Fig. 9 WO 2015/180923 A1).

However, the doctor would desire a single continuous image wherein the features of the iridocorneal angle would extend without discontinuities along the picture, as in the reality. This is not the result achieved by simply placing the images side by side.

For example, considering the sixteen images of annexed Fig.s 1-16 of the iridocorneal angle of the same eye at different angular positions, the result achieved by simply placing them side by side would be quite odd and difficult to use by a doctor.

### SUMMARY of the INVENTION

It is the object of the present invention to provide methods of stitching a plurality of acquired images of an angular sector of an iridocorneal angle of an eye.

Such object is achieved through the method having the features set out in the appended claims that have to be considered an integral part of the present description.

Other aspects of the present invention are a computer program product and a medical apparatus.

Typically, the picture obtained through a method according to the present invention is either rectangular or annular (in particular as a circular annulus). Preferably, the picture obtained through a method according to the present invention corresponds to the whole iridocorneal angle of an eye, i.e. to a 360° angular sector.

The picture obtained through a method according to the present invention may be annotated, i.e. a doctor has the possibility to add signs and/or notes to the stitched images typically after stitching.

### LIST of DRAWINGs

The present invention will become more apparent from the following description to be considered in conjunction of with the annexed figure wherein:
Fig.s 1-16 show an example of a set of 16 images of an iridocorneal angle of a same right eye that may be stitched according to the methods of the present invention,
Fig. 17 shows a first example of a stitching of the images in Fig.s 1-16 according to a first method of the present invention,
Fig. 18 shows a second example of a stitching of the images in Fig.s 1-16 according to a second method of the present invention,
Fig. 19 shows a third example of a stitching of the images in Fig.s 1-16 according to a third method of the present invention, and
Fig. 20 shows a cross-section of a portion of an eye including an iridocorneal angle of the eye.

It is to be noted that the present invention is not restricted to what described in the following and shown in the annexed figures, but its scope is determined solely by the appended claims.

### DETAILED DESCRIPTION of the INVENTION

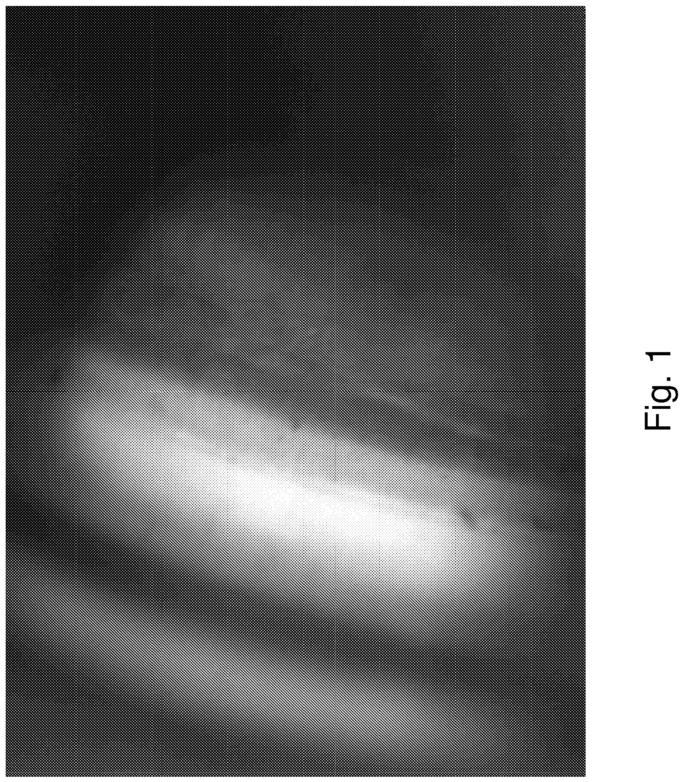

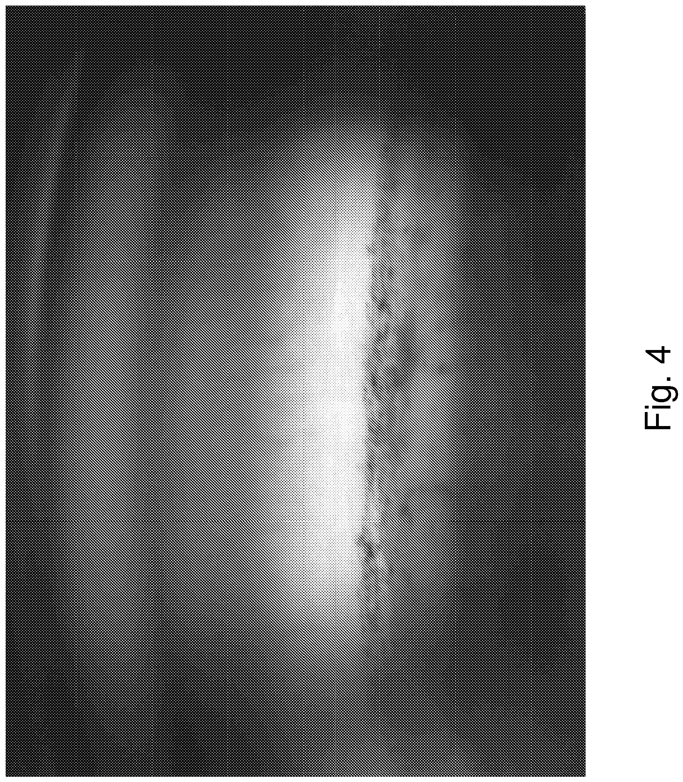

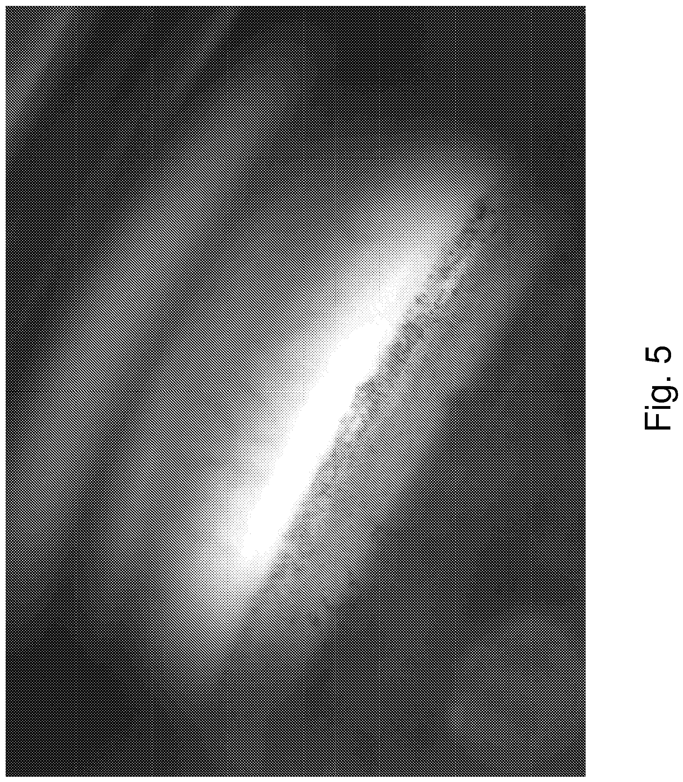

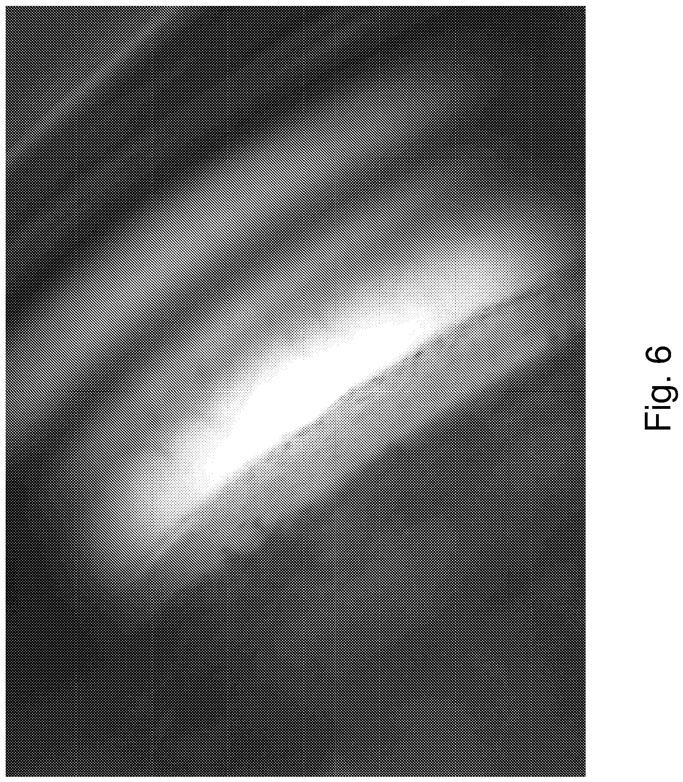

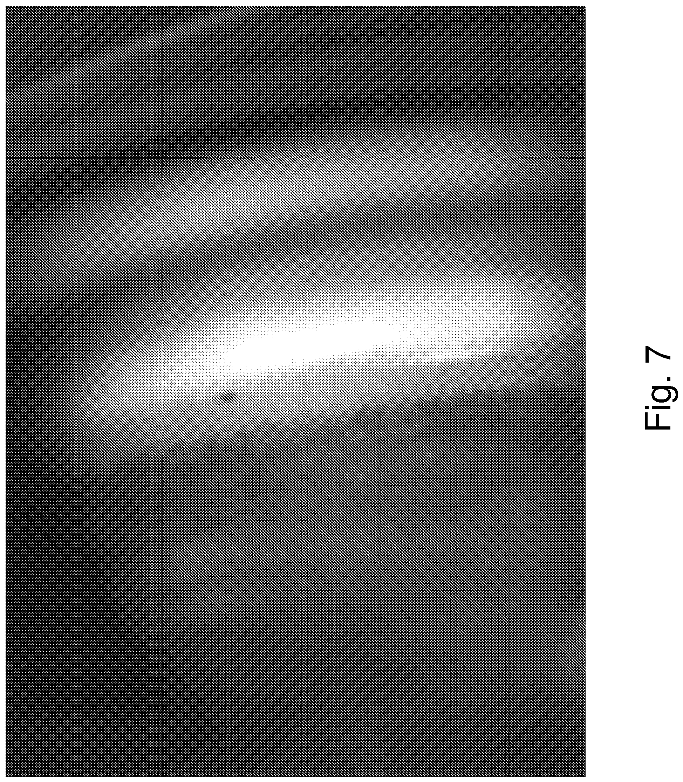

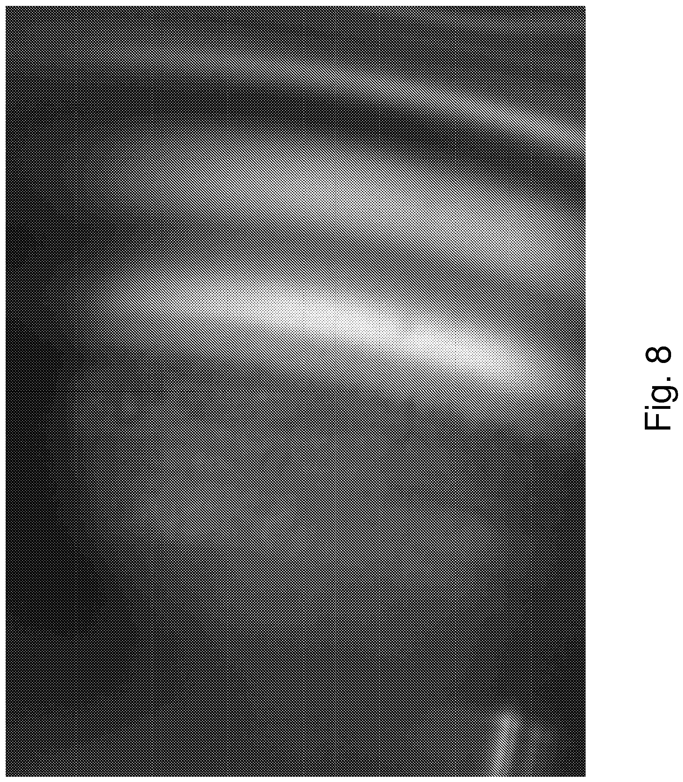

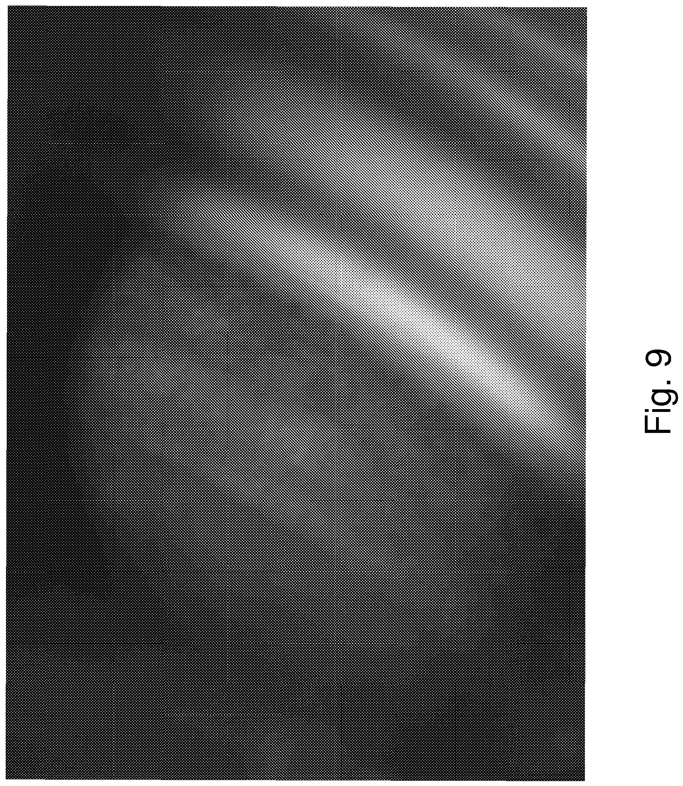

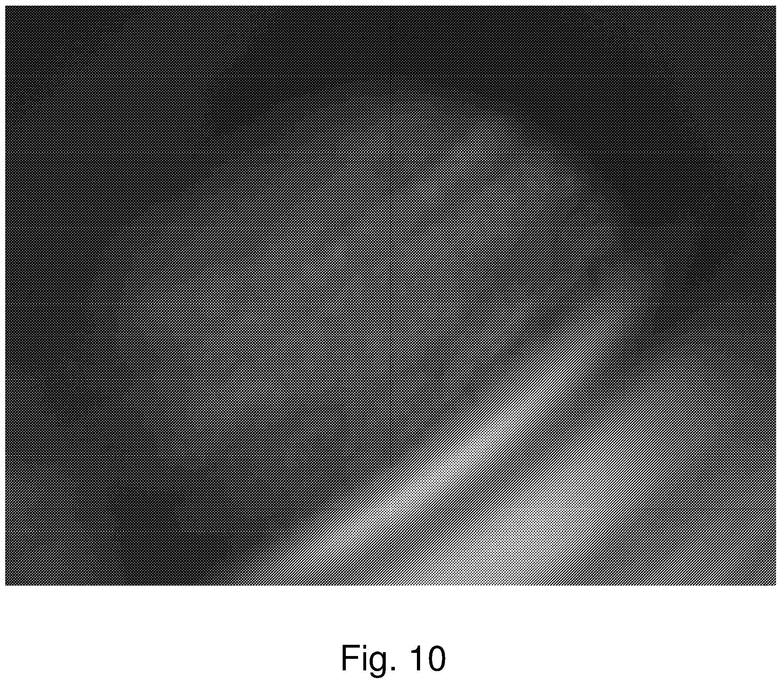

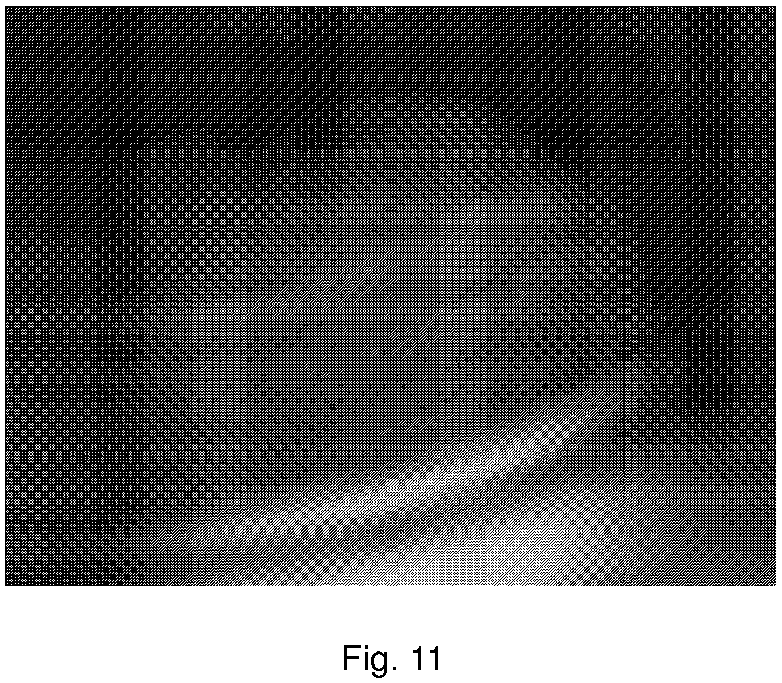

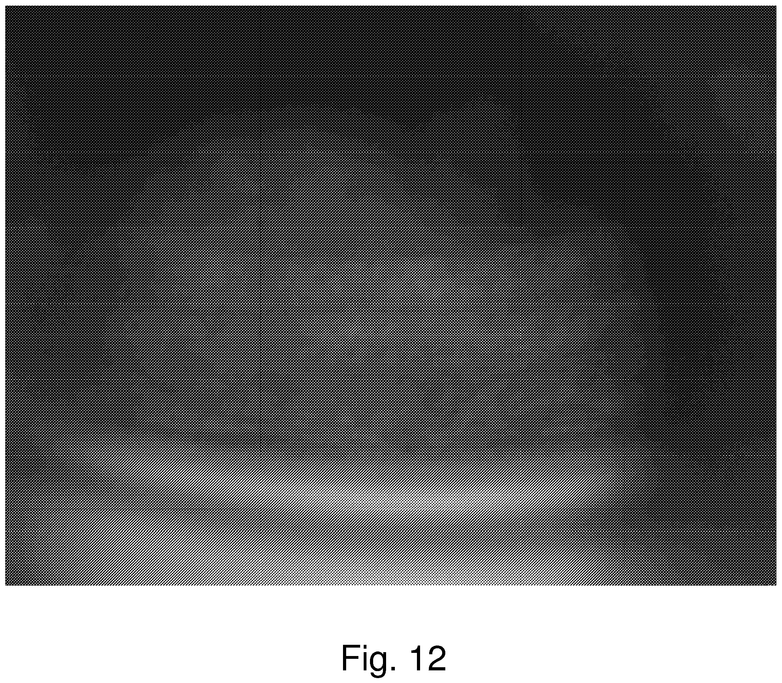

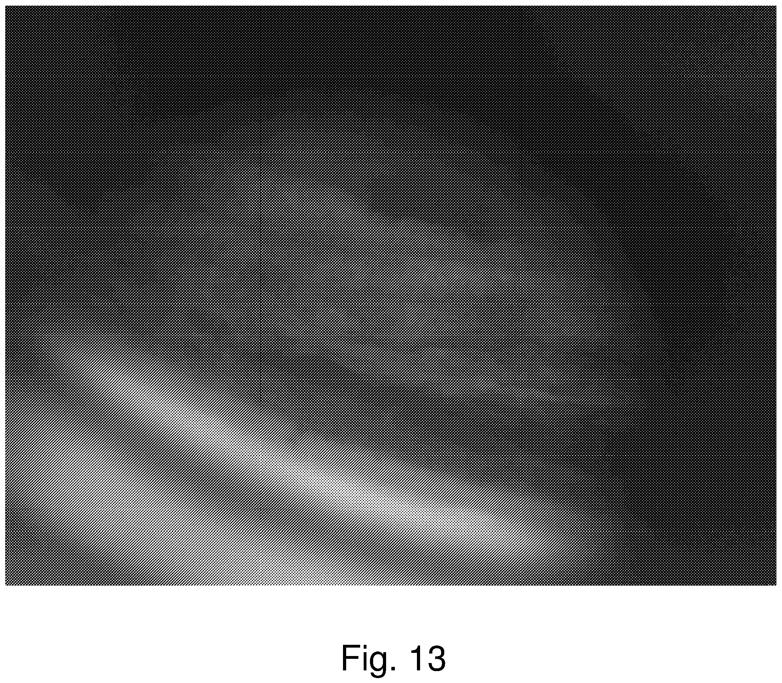

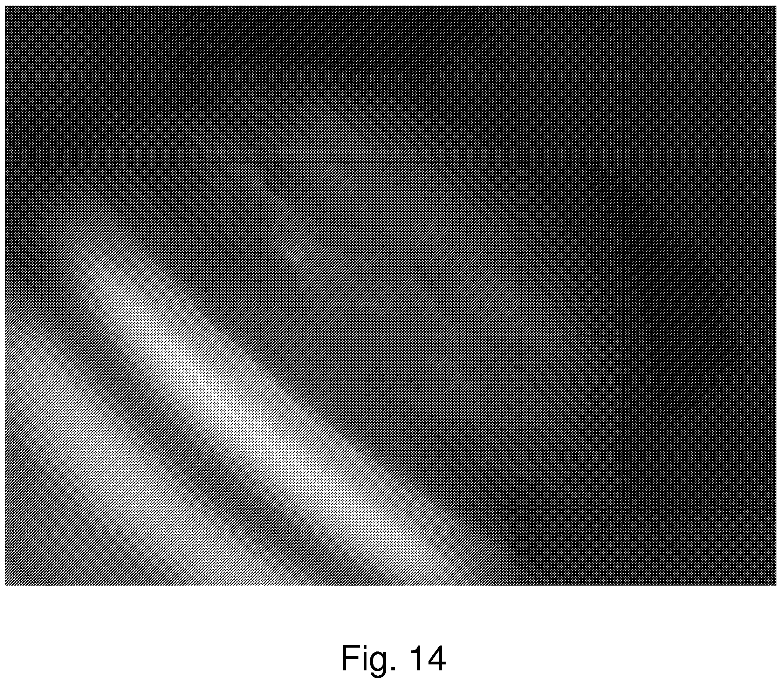

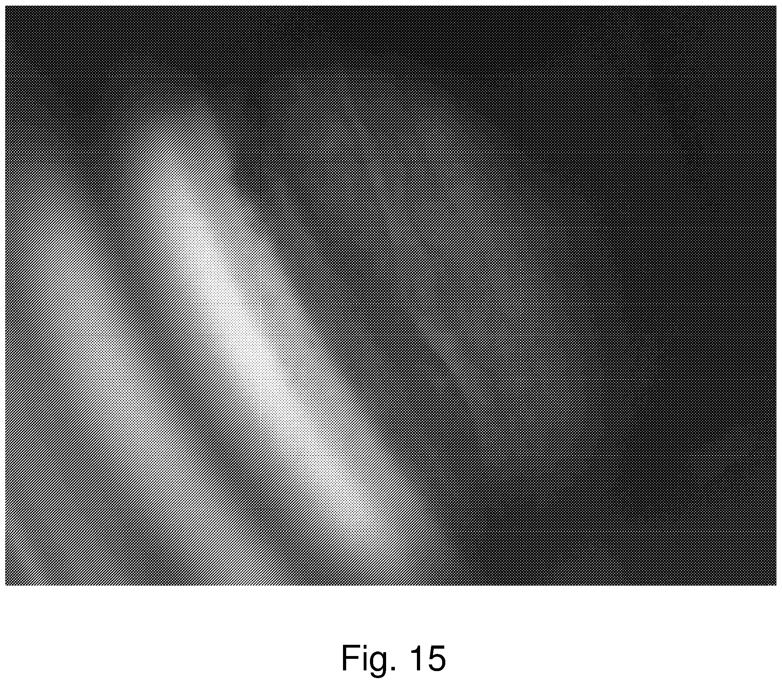

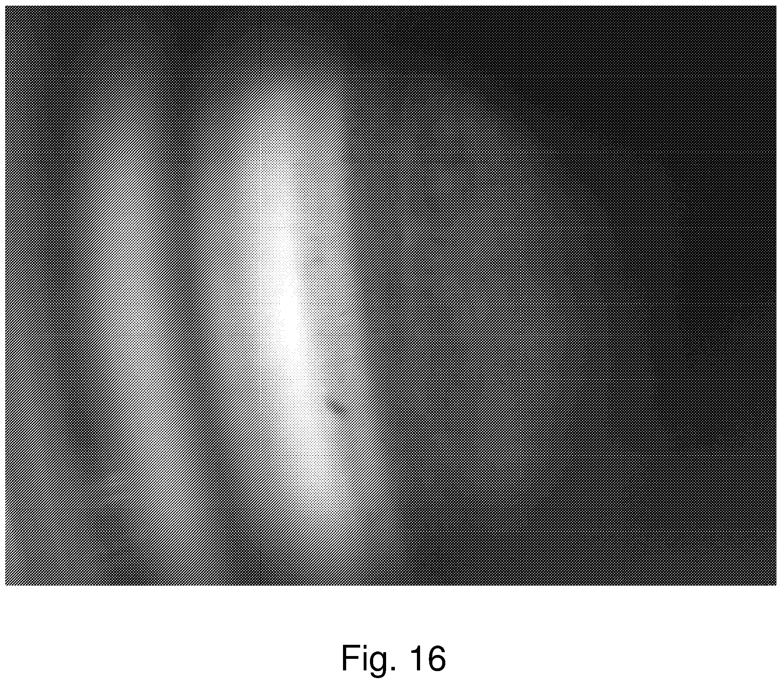

The images of Fig.s 1-16 are obtained for example from an apparatus according to patent document WO 2015/180923 A1, in particular from an apparatus according to its embodiment of Fig. 7. Fig. 4 corresponds to the view of the inferior sector of the iridocorneal angle (so-called "I" view); Fig. 8 corresponds to the view of the temporal sector of the iridocorneal angle (so-called "T" view); Fig. 12 corresponds to the view of the superior sector of the iridocorneal angle (so-called "S" view); Fig. 16 corresponds to the view of the nasal sector of the iridocorneal angle (so-called "N" view). Moving from Fig. 1 to Fig. 16, the view corresponds to an angular sector of the iridocorneal angle successively shifted by 22.5°; this is achieved by successively rotating the rear optical assembly 705 (in particular the central mirror 715 and the lateral mirror 725) by 22.5° and thus correspondingly rotating also the acquisition direction of the image.

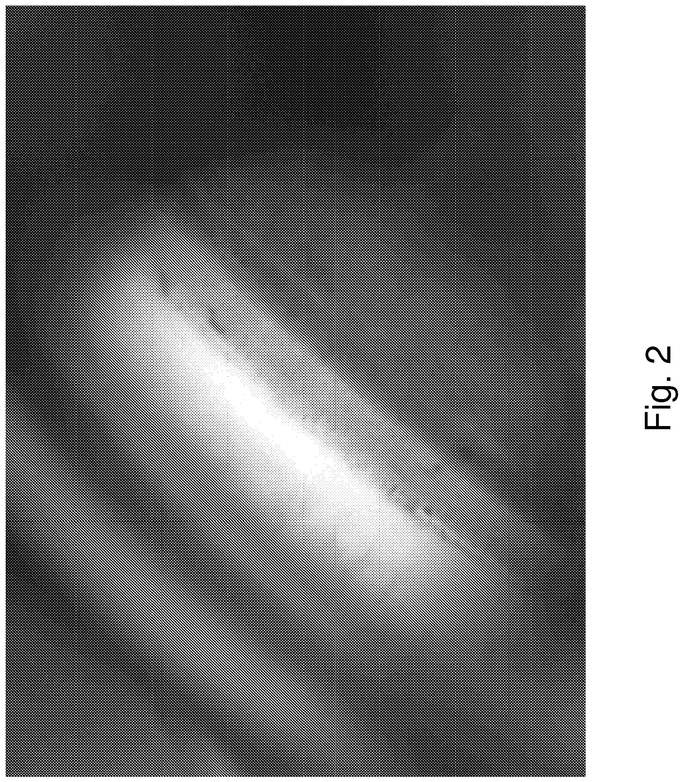

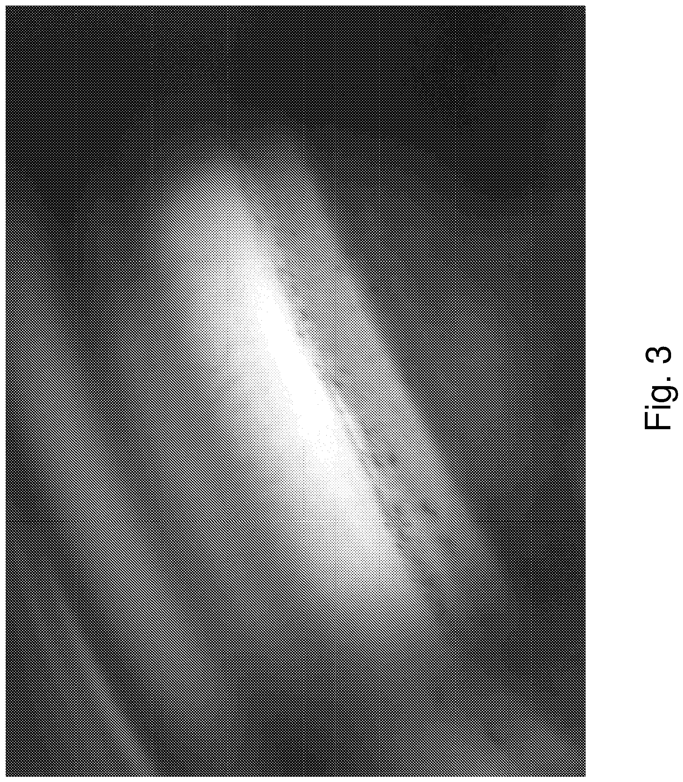

The angular sector of the iridocorneal angle of each image is approximately 30-40° wide thus some portions of the angle appear in two distinct images; for example, a same portion appears both in Fig. 1 and Fig. 2, a same portion appears both in Fig. 2 and Fig. 3, a same portion appears both in Fig. 3 and Fig. 4, and so on. As it is apparent from the Fig.s 1-16, according to the example, the view is not only shifted by 22.5° but also rotated by 22.5°.

Considering Fig.s 1-16 and the embodiment of Fig. 7 of patent document WO 2015/180923 A1, a person skilled in the art understands that when these images were captured the apparatus axis was not perfectly aligned to the eye axis; it is to be noted that these sixteen images were captured at a time distance of 0.5-2.0 seconds so we can assume that the same misalignment applies to all images.

It is apparent that stitching well these images is not an easy task but some help may derive from considering their specificities (read afterwards in particular processing at step B of the method).

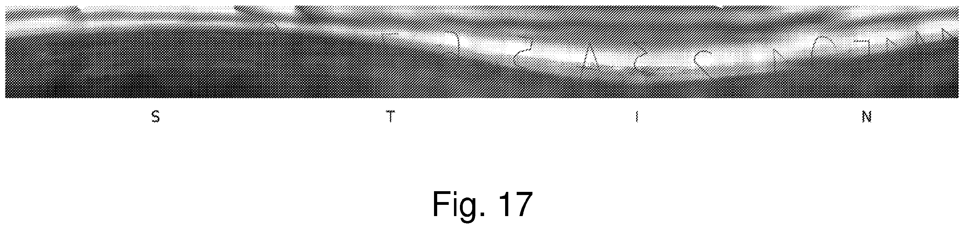

It is also apparent that the stitching shown in figures 17, 18 and 19 is a very good result.

It is to be noted that the methods according to the present invention may be used for stitching sets of iridocorneal angle images different from those of Fig.s 1-16 and not necessarily acquired through an apparatus according to patent document WO 2015/180923 A1.

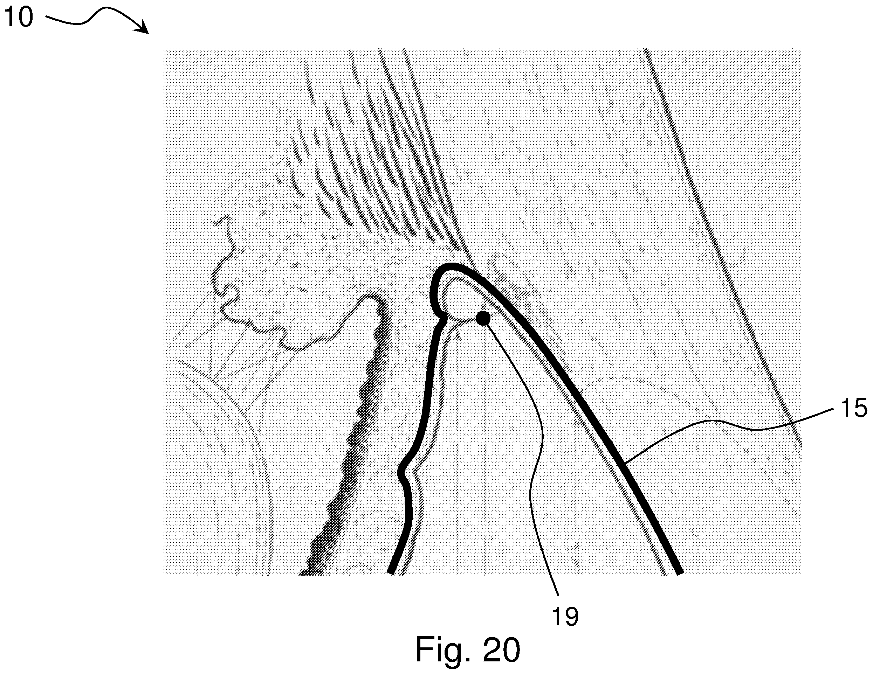

Fig. 20 shows a cross-section of a portion 10 of an eye including an iridocorneal angle of the eye. An iridocorneal angle defines an iridocorneal angle surface between the tissues and the aqueous humor (see superimposed thick line 15 that is slighted spaced from the true profile of this surface for clarity reasons); following this surface, we encounter: the iris, the ciliary body, the scleral spur, the pigmented trabecular meshwork, the non-pigmented trabecular meshwork, the Schwalbe's line, and the cornea. As this figure highlights, the iridocorneal angle surface is continuous and regular; it is to be noted that there may be fine and rather long anatomical structures projecting from this continuous and regular surface, such as "iris processes" (that are also shown in Fig. 20 and labeled 19).

Fig.s 1-16 are examples of "starting" images to be processed. As can be noticed from any of these figures (for example from Fig. 2), each of the various structures/tissues of the iridocorneal angle (i.e. iris, ciliary body, scleral spur, pigmented trabecular meshwork, non-pigmented trabecular meshwork, Schwalbe's line, cornea) forms a stripe in the figure; however, it may happen that one of more these structures/tissues cannot be seen in an image; the stripe may be straight or slightly curved (typically as an arc of circle). As can be noticed from any of these figures (for example from Fig. 2), lightness is not uniform across the area of the image; in particular, the central portion of the image is lighter while the peripheral portion of the image is darker.

The method according to the present invention may be used for stitching a plurality (from a minimum of e.g. 4 to a maximum of e.g. 40) of acquired images of an angular sector of an iridocorneal angle of a same eye; the angular sector may be wide from e.g. 60° to a maximum of 360°. According to the best embodiments of the present invention, the angular sector is a 360°-sector, i.e. the images correspond to a whole iridocorneal angle of an eye.

The images to be stitched may have for example a rectangular shape or a square shape, and may be for example at least 200 pixels wide and at least 200 pixels high.

To be precise the images of the plurality has an order (i.e. the plurality is an ordered plurality). They are ordered so that two immediately successive images may be called "adjacent" in the sense that they show approximately adjacent portions of the iridocorneal angle of an eye.

In general, the method according to the present invention comprises the steps of:
A) processing the acquired images, wherein each of the acquired image is rotated and/or perspectively corrected and/or devignetted,
B) registering the processed images, wherein for each couple of adjacent processed images a transformation is determined that correlates the couple,
C) positioning the registered images, wherein for each registered image a corresponding relative positioning is carried out, and
D) merging the positioned images based on their relative positions;
whereby a panoramic linear picture of said angular sector of iridocorneal angle of eye in the form of a rectangular picture is obtained - see for example Fig. 17. Step B in particular is carried out taking into account the specificities of the images of the eye iridocorneal angle, as explained later.

The method may further comprise a step "E" of remapping the images after step D, wherein a coordinate transformation is applied to said panoramic linear picture. The method may further comprise a step "F" of labelling the images and/or the panoramic linear picture (for example after step D or E), wherein tags may be applied to said panoramic linear picture, wherein the content of the tags may be provided by a digital computer. Tags may indicate for example the position of one or more or each acquired image with respect to the eye, and/or for example scales.

The method may further comprise a step "G" of annotating the images and/or the panoramic linear picture (for example after step D or E or F), wherein the content of the annotation may be provided by a doctor and/or an operator.

At step "A", each acquired image may be:
- preferably masked so to exclude lateral image portions,
- rotated (if necessary) so as its tangential median line is longitudinal, the tangential median line being a straight line passing through the centre of the image and being perpendicular to the acquisition direction of the image,
- optionally corrected from the perspective point of view so to cancel image deformations caused by the acquisition geometry,
- optionally devignetted so to obtain uniform brightness all over the image.

It is to noted that very often the acquisition direction of an image is known to the apparatus; for example, in the apparatuses according to patent document WO 2015/180923 A1 each acquired image is associated to a precise acquisition direction. Alternatively, the acquisition direction may be roughly (e.g. +/- 10°) estimated from the image itself.

It is to be noted that all or some of the acquired images may correspond to the same view and so it is unnecessary to rotate them. For example, if the apparatuses according to the embodiments of Fig.s 2-5 of patent document WO 2015/180923 A1 are used no rotation of images is necessary, while , if the apparatuses according to the embodiments of Fig.s 6-7 of patent document WO 2015/180923 A1 are used rotation of images is necessary (as it is apparent from annexed Fig.s 1-16).

It is to be noted that the need for perspective correction derives from the acquisition geometry. For example, if the apparatuses according to any of the embodiments of patent document WO 2015/180923 A1 are used perspective correction is necessary and is due to the conical or pyramidal shape of the reflective element of the front optical assembly.

At step "B" for each couple of adjacent processed images a coordinate transformation of one image of the couple may be determined so that one or more features of the images of the couple are aligned; a feature is in particular a portion of an iris or a portion of a sclera or a portion of a trabecular meshwork. Such coordinate transformation is preferably "non-reflective similarity". Usually, such coordinate transformation consists in rotation and translation; sometimes, such coordinate transformation includes also scaling.

At step "B" for each couple of adjacent processed images a first region-of-interest within a first image of the couple and a second region-of-interest within a first image of the couple may be identified being at the opposite ends of a tangential median line (the tangential median line is a straight line passing through the centre of the image and being perpendicular to the acquisition direction of the image); the region-of interest may be for example a square with a side of 256 pixels if the image is a rectangle 1280 pixels wide and 960 pixels high. It is possible and advantageous that only regions-of-interest (i.e. areas of the images much smaller than the whole images) are used for registration.

In order to identify the two regions-of-interest, i.e. ROIs, within an image of the couple, a reference point or a reference small area may be considered; this reference point or a reference small area is used as a starting point for the search of the ROIs. ROIs are selected considering that there is some common information between adjacent processed images, due to the acquisition system, as previously explained. The identification of the reference point or reference small area is preferably done for each processed image and it can be performed automatically or manually or both automatically and manually. In case of manual identification, for each image the user is asked to provide a point or a small area; preferably, the user is asked to provide a point or a small area along the image median line (line passing through the center of the image and oriented according to the acquisition angle). The point or small area marks a feature that is present in both the adjacent images so that the derived ROIs are more likely to contain common information. An example of reliable manually-selected reference point is the Trabecular Meshwork (or the irido-corneal limit in case of closed irido-corneal angle, see fig.20) that shall be present in all the acquired images, if the exam has been acquired properly.

Algorithms that may advantageously be used for image registration are:
- Orientation Correlation (see A.J.Fitch, A.Kadyrov, W.J.Christmas, J.Kittler, Orientation Correlation, British Machine Vision Conference, Cardiff, UK, 133-142, 2002),
   and
- Fourier Moment Matching (see Hong-Ren Su, Hao-Yuan Kuo, Shang-Hong Lai, Chin-Chia Wu, "Fast 3D Object Alignment from Depth Image with 3D Fourier Moment Matching on GPU", 3D Vision (3DV) 2014 2nd International Conference on, vol. 1, pp. 179-186, 2014).

At step "C" said relative positioning is typically a translation of an image with respect to the previously adjacent image.

At step "C" for each registered image a relative position and an absolute position may be computed according to the registration parameters, and the relative position and absolute position may be associated to the registered image.

It is to be understood that after step "C", i.e. after positioning, adjacent images partially overlaps.

At step "D" the following steps may be performed:
- for each positioned image a non-overlapping area and two overlapping areas are identified,
- colour blending is performed at least at the overlapping areas thus obtaining blended areas,
- the non-overlapping areas and the blended areas are combined thus forming a single image,
- preferably the single image is cropped according to a rectangular contour. Once a panoramic linear picture further processing is possible and may be advantageous. This is not limited to labelling and/or annotating.

For example, a panoramic linear picture may be processed through geometrical transformation and coordinate mapping thereby obtaining a panoramic circular picture; typically, the whole panoramic linear picture is processed.

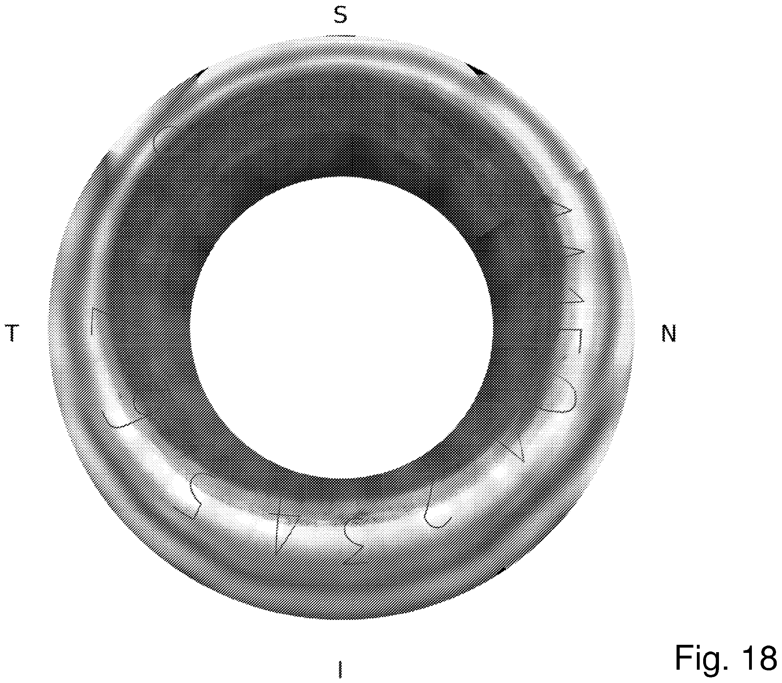

According to a first more specific example, if the panoramic linear picture corresponds to a 360° angular sector, it may be entirely processed through geometrical transformation and coordinate mapping thereby obtaining a panoramic circular picture of the whole iridocorneal angle of an eye in the form of an annular picture - see for example Fig. 18.

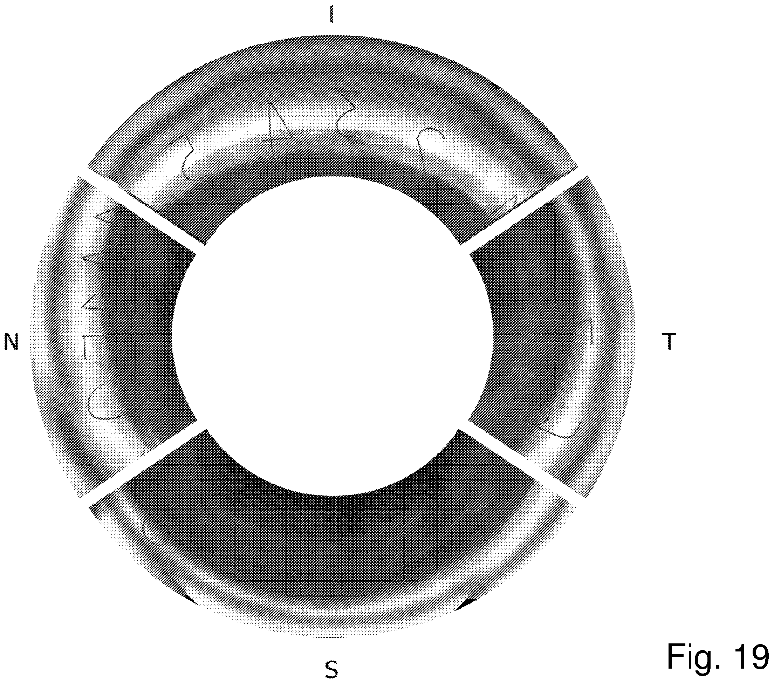

According to a second more specific example, if the panoramic linear picture corresponds to a 360° angular sector, it may be processed through a corresponding geometrical transformation and a corresponding coordinate mapping thereby obtaining four panoramic 90°-sector curved pictures of the iridocorneal angle of an eye, finally said four panoramic 90°-sector curved pictures are combined in the form of a single annular picture, i.e. virtual (Becker) "goniogram" - see for example Fig. 19.

It is to be noted that the pictures of both Fig. 18 and Fig. 19 derive from the picture of Fig. 17.

In the examples of Fig. 17 and Fig. 18 and Fig. 19, numbers (corresponding to angular sector tags) are superimposed on the images; the appearance of the numbers reflects geometrical transformation and coordinate mapping of the image. The methods according to the present invention are typically carried out by a digital computer running an appropriate computer program loaded into the internal memory of the digital computer.

Such digital computer may be integrated into the same medical apparatus used for acquiring the images to be stitched.

Alternatively, such digital computer may receive images to be stitched though a memory medium (for example a CD or a DVD or a pen-drive) or from a data cable (for example a computer network cable) or over the air (wireless connection, optical connection, mobile telephone connection).

## Claims

1. Method of stitching a plurality of acquired images of an angular sector of an iridocorneal angle of an eye, comprising the steps of:
A) processing the acquired images, wherein each of the acquired image is rotated and/or perspectively corrected and/or devignetted,
B) registering the processed images, wherein for each couple of adjacent processed images a transformation is determined that correlates the couple,
C) positioning the registered images, wherein for each registered image a corresponding relative positioning is carried out, and
D) merging the positioned images based on their relative positions; whereby a panoramic linear picture of said angular sector of iridocorneal angle of eye in the form of a rectangular picture is obtained; wherein at step "B" for each couple of adjacent processed images a coordinate transformation of one image of the couple is determined so that one or more features of the images of the couple are aligned, a feature being in particular a portion of an iris or a portion of a sclera or a portion of a trabecular meshwork;
and
wherein at step "B" for each couple of adjacent processed images a first region-of-interest within a first image of the couple and a second region-of-interest within a first image of the couple are identified being at the opposite ends of a tangential median line, the tangential median line being a straight line passing through the centre of the image and being perpendicular to the acquisition direction of the image.

2. Method according to claim 1, wherein at step "A" each acquired image is:
- preferably masked so to exclude lateral image portions,
- rotated so as its tangential median line is longitudinal, the tangential median line being a straight line passing through the centre of the image and being perpendicular to the acquisition direction of the image,
- optionally corrected from the perspective point of view so to cancel image deformations caused by the acquisition geometry,
- optionally devignetted so to obtain uniform brightness all over the image.

3. Method according to claim 1 or 2, wherein said coordinate transformation is "non-reflective similarity".

4. Method according to claim 1 or 2 or 3, wherein only said first region-of-interest and said second region-of-interest are used for registration.

5. Method according to any of the preceding claims, wherein at step "C" said relative positioning is a translation of an image with respect to the previously adjacent image.

6. Method according to any of the preceding claims, wherein at step "D":
- for each positioned image a non-overlapping area and two overlapping areas are identified,
- colour blending is performed at least at the overlapping areas thus obtaining blended areas,
- the non-overlapping areas and the blended areas are combined thus forming a single image,
- preferably the single image is cropped according to a rectangular contour.

7. Method according to any of the preceding claims, wherein said panoramic linear picture is processed through geometrical transformation and coordinate mapping thereby obtaining a panoramic circular picture.

8. Computer program product loadable into the internal memory of a digital computer, comprising software code portions for performing the steps of the method according to any of the preceding claims from 1 to 7 when said product is run on a computer.

9. Medical apparatus specifically adapted to carry out the method according to any of the preceding claims from 1 to 7.

## Patentansprüche

1. Verfahren zum Zusammenfügen einer Vielzahl von aufgenommenen Bildern eines Winkelsektors eines Iridokornealwinkels eines Auges, das die folgenden Schritte umfasst:
A) Verarbeitung der aufgenommenen Bilder, wobei jedes der aufgenommenen Bilder gedreht und/oder perspektivisch korrigiert werden und/oder ihre Randabschattung aufgehoben wird,
B) Registrieren der verarbeiteten Bilder, wobei für jedes Paar benachbarter verarbeiteter Bilder eine Transformation bestimmt wird, die das Paar korreliert,
C) Positionierung der registrierten Bilder, wobei für jedes registrierte Bild eine entsprechende relative Positionierung durchgeführt wird, und
D) Zusammenfügen der positionierten Bilder auf der Grundlage ihrer relativen Positionen; wodurch ein lineares Panoramabild des Winkelsektors des Iridokornealwinkels des Auges in Form eines rechteckigen Bildes erhalten wird; wobei im Schritt "B" für jedes Paar benachbarter verarbeiteter Bilder eine Koordinatentransformation eines Bildes des Paares bestimmt wird, so dass ein oder mehrere Merkmale der Bilder des Paares ausgerichtet werden, wobei ein Merkmal insbesondere ein Teil einer Iris oder ein Teil einer Sklera oder ein Teil eines Trabekelnetzes ist;
und
wobei im Schritt "B" für jedes Paar benachbarter verarbeiteter Bilder ein erster interessanter Bereich innerhalb eines ersten Bildes des Paares und ein zweiter interessanter Bereich innerhalb eines ersten Bildes des Paares identifiziert werden, die sich an den entgegengesetzten Enden einer tangentialen Mittellinie befinden, wobei die tangentiale Mittellinie eine gerade Linie ist, die durch die Mitte des Bildes verläuft und senkrecht zur Aufnahmerichtung des Bildes steht.

2. Verfahren nach Anspruch 1, wobei im Schritt "A" jedes erfasste Bild:
- vorzugsweise maskiert ist, um seitliche Bildteile auszuschließen,
- so gedreht ist, dass seine tangentiale Mittellinie in Längsrichtung verläuft, wobei die tangentiale Mittellinie eine gerade Linie ist, die durch die Mitte des Bildes verläuft und senkrecht zur Aufnahmerichtung des Bildes steht,
- optional perspektivisch korrigiert ist, um durch die Aufnahmegeometrie verursachte Bildverformungen auszugleichen,
- optional eine Aufhebung der Abschattung aufweist, um eine gleichmäßige Helligkeit im gesamten Bild zu erhalten.

3. Verfahren nach Anspruch 1 oder 2, wobei die Koordinatentransformation "nichtreflektierende Ähnlichkeit" ist.

4. Verfahren nach Anspruch 1 oder 2 oder 3, wobei nur der erste interessante Bereich und der zweite interessante Bereich für die Registrierung verwendet werden.

5. Verfahren nach einem der vorhergehenden Ansprüche, wobei im Schritt "C" die relative Positionierung eine Verschiebung eines Bildes in Bezug auf das zuvor benachbarte Bild ist.

6. Verfahren nach einem der vorhergehenden Ansprüche, wobei im Schritt "D":
- für jedes positionierte Bild ein nicht überlappender Bereich und zwei überlappende Bereiche ermittelt werden,
- die Farbmischung zumindest in den sich überlappenden Bereichen durchgeführt wird, so dass gemischte Bereiche entstehen,
- die nicht überlappenden Bereiche und die gemischten Bereiche zu einem einzigen Bild kombiniert werden,
- vorzugsweise das Einzelbild entsprechend einer rechteckigen Kontur beschnitten wird.

7. Verfahren nach einem der vorhergehenden Ansprüche, wobei das lineare Panoramabild durch geometrische Transformation und Koordinatenzuordnung verarbeitet wird, wodurch ein kreisförmiges Panoramabild erhalten wird.

8. Computerprogrammprodukt, das in den internen Speicher eines Digitalcomputers geladen werden kann und Softwarecodeabschnitte zur Durchführung der Schritte des Verfahrens nach einem der vorangehenden Ansprüche 1 bis 7 enthält, wenn das Produkt auf einem Computer ausgeführt wird.

9. Medizinisches Gerät, das speziell für die Durchführung des Verfahrens nach einem der vorhergehenden Ansprüche 1 bis 7 geeignet ist.

## Revendications

1. Procédé d'assemblage d'une pluralité d'images acquises d'un secteur angulaire d'un angle irido-cornéen d'un œil, comprenant les étapes suivantes :
A) le traitement des images acquises, où chacune des images acquises est tournée et/ou corrigée en perspective et/ou dévignettée,
B) l'enregistrement des images traitées, où pour chaque couple d'images traitées adjacentes, une transformation est déterminée qui corrèle le couple,
C) le positionnement des images enregistrées, où pour chaque image enregistrée, un positionnement relatif correspondant est effectué, et
D) le fusionnement des images positionnées sur la base de leurs positions relatives ; ce qui permet d'obtenir une image linéaire panoramique dudit secteur angulaire de l'angle irido-cornéen de l'œil sous la forme d'une image rectangulaire ; où à l'étape « B », pour chaque couple d'images traitées adjacentes, une transformation de coordonnées d'une image du couple est déterminée de sorte qu'une ou plusieurs caractéristiques des images du couple soient alignées, une caractéristique étant en particulier une partie d'un iris ou une partie d'une sclérotique ou une partie d'un réseau trabéculaire ;
et
où, à l'étape « B », pour chaque couple d'images traitées adjacentes, une première région d'intérêt dans une première image du couple et une seconde région d'intérêt dans une première image du couple sont identifiées comme étant aux extrémités opposées d'une ligne médiane tangentielle, la ligne médiane tangentielle étant une ligne droite passant par le centre de l'image et étant perpendiculaire à la direction d'acquisition de l'image.

2. Procédé selon la revendication 1, où, à l'étape « A », chaque image acquise est :
- de préférence masquée de manière à exclure les parties latérales de l'image,
- tournée de manière à ce que sa ligne médiane tangentielle soit longitudinale, la ligne médiane tangentielle étant une ligne droite passant par le centre de l'image et étant perpendiculaire à la direction d'acquisition de l'image,
- éventuellement corrigée du point de vue de la perspective de manière à annuler les déformations de l'image causées par la géométrie d'acquisition,
- éventuellement dévignettée de manière à obtenir une luminosité uniforme sur toute l'image.

3. Procédé selon la revendication 1 ou 2, où ladite transformation de coordonnées est une « similarité non réfléchie ».

4. Procédé selon la revendication 1 ou 2 ou 3, où seules ladite première région d'intérêt et ladite seconde région d'intérêt sont utilisées pour l'enregistrement.

5. Procédé selon l'une quelconque des revendications précédentes, où à l'étape « C », ledit positionnement relatif est une translation d'une image par rapport à l'image précédemment adjacente.

6. Procédé selon l'une quelconque des revendications précédentes, où à l'étape « D » :
- pour chaque image positionnée, une zone sans chevauchement et deux zones de chevauchement sont identifiées,
- le mélange des couleurs est effectué au moins dans les zones de chevauchement, ce qui permet d'obtenir des zones mélangées,
- les zones sans chevauchement et les zones mélangées sont combinées pour former une seule image,
- de préférence, l'image unique est recadrée selon un contour rectangulaire.

7. Procédé selon l'une quelconque des revendications précédentes, où ladite image linéaire panoramique est traitée par transformation géométrique et cartographie de coordonnées pour obtenir une image circulaire panoramique.

8. Produit de programme informatique pouvant être chargé dans la mémoire interne d'un ordinateur numérique, comprenant des parties de code logiciel pour effectuer les étapes du procédé selon l'une quelconque des revendications précédentes de 1 à 7 lorsque ledit produit est exécuté sur un ordinateur.

9. Appareil médical spécifiquement adapté à la mise en œuvre du procédé selon l'une quelconque des revendications précédentes de 1 à 7.
